# EUROPEAN PATENT SPECIFICATION

(11) **EP 1 937 904 B1**
(45) Date of publication and mention of the grant of the patent: **14.12.2016**
(21) Application number: 06799764.3
(22) Date of filing: 13.10.2006
(51) Int. Cl.: E02F 9/22, E02F 9/20, F15B 21/14, B60K 6/387, B60K 6/547, B60K 6/442

(54) **A WORKING MACHINE**
ARBEITSMASCHINE
MACHINE DE TRAVAIL

(30) Priority: 14.10.2005 SE 0501539
(43) Date of publication of application: 02.07.2008
(73) Proprietor: Volvo Construction Equipment AB, 631 85 Eskilstuna (SE)
(72) Inventor: FILLA, Reno, SE-632 20 Eskilstuna (SE); UNNEBÄCK, Joakim, SE-633 47 Eskilstuna (SE); CARLSSON, Sven-Åke, S-632 39 Eskilstuna (SE); ERICSON, Hans, S-632 39 Eskilstuna (SE)
(74) Representative: Volvo Technology Corporation
(86) International application number: PCT/SE2006/001164
(87) International publication number: WO 2007/043953

(56) References cited:
- EP-A- 0 059 471
- EP-A1- 1 288 505
- EP-A1- 1 288 505
- EP-A1- 1 291 467
- EP-A1- 1 571 352
- EP-A1- 1 571 352
- JP-A- 09 165 789
- JP-A- 11 336 703
- JP-A- 2000 273 913
- JP-A- 2000 273 913
- US-A1- 2002 148 144

## Description

### TECHNICAL FIELD

The invention relates to a working machine adapted for at least two functions, which comprise moving an implement and/or steering the machine.

The invention is applicable on working machines within the field of industrial construction machines, in particular wheel loaders. Although the invention will be described with respect to a wheel loader, the invention is not restricted to this particular vehicle, but may also be used in other heavy working machines, such as articulated haulers, trucks and excavators.

### BACKGROUND OF THE INVENTION

A wheel loader is usually provided with an internal combustion engine, a transmission line, and a gearbox for supplying torque to the driving wheels of the wheel loader. The gearbox provides different gear ratios for varying the speed of the vehicle, and for changing between forward and backward driving direction. The transmission line comprises a hydrodynamic torque converter arranged between the internal combustion engine and the gearbox. The torque converter is used to increase the torque during particularly heavy working operations, such as filling the bucket or acceleration of the wheel loader. The torque converter can very quickly adapt the output torque to the current working conditions. However, the torque converter has often a very low efficiency which is also dependent on the current driving conditions. The efficiency can be increased if the torque converter is provided with a lock-up function which can be used for direct operation. However, the gear ratio is fixed (1:1) in the lock-up state, and the problem of low efficiency remains during working operations where such a lock-up function cannot be used.

In addition to supply torque to the driving wheels, the internal combustion engine has to supply energy to a hydraulic pump of a hydraulic system of the wheel loader. Such a hydraulic system is used for lifting operations and/or steering the wheel loader. Hydraulic working cylinders are arranged for lifting and lowering a lifting arm unit, on which a bucket or other type of attachment or working tool, for example forks, is mounted. By use of another hydraulic working cylinder, the bucket can also be tilted or pivoted. Further hydraulic cylinders known as steering cylinders are arranged to turn the wheel loader by means of relative movement of a front and rear body part of the wheel loader.

On one hand, the rotation speed of the internal combustion engine has to be adapted to the hydraulic pump, and on the other hand, the internal combustion engine has to be adapted to the need for a very high torque, for example during filling the bucket when the speed of the wheel loader is close to zero. A rotation speed of the internal combustion engine determined by the hydraulic system means that the wheel loader has to be braked so as to adapt the velocity of the wheel loader to the current conditions. In order to fulfil the demands on speed of rotation and torque in different situations, the internal combustion engine has to be dimensioned for an unnecessary high effective output which output is not required or is only infrequently required. The use of an internal combustion engine which in some respects is oversized and further has to be driven during circumstances where the torque converter has low efficiency, and/or during conditions where the wheel loader has to be braked due to the hydraulic system, will result in high fuel consumption.

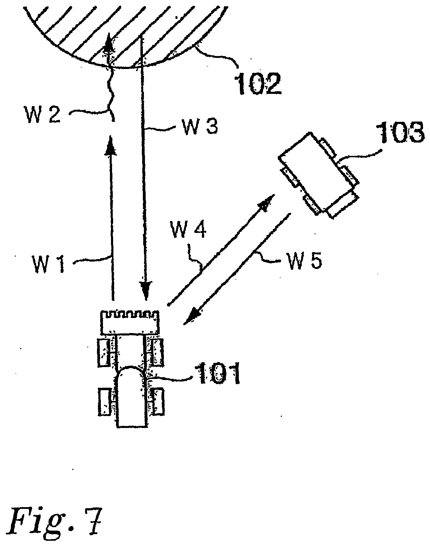

A wheel loader is generally used to excavate a natural ground with a bucket and load it onto a dump truck. FIG. 7 shows a series of driving pattern from excavation of a wheel loader 101 to loading onto a dump truck 103, and this is a driving pattern called V-shape driving, which is the most frequently used. Specifically, the wheel loader 101 travels forward to a natural ground 102 in for example a forward second speed gear (driving W1). When it approaches the natural ground 102, it thrusts into the natural ground 102 in for example a forward first speed gear in order to increase tractive force for the case in which an excavating operation is performed (driving W2). When the excavation is finished, the wheel loader 101 is retreated from an excavating operation position at a high speed in for example a reverse second speed gear (driving W3). Subsequently, a traveling direction of the wheel loader 101 is changed, and it is forwarded to approach the dump truck 103 at a high speed (driving W4). When a loading operation for the dump truck 103 is finished, the wheel loader moves away from the dump truck 103 at a high speed (driving W5).

In some work operations, the hydraulic system sets contradictory demands on the internal combustion engine, which may lead to that the internal combustion engine has to be dimensioned for an unnecessary high effective output which output is only infrequently required. One critical case for the hydraulic system is when the functions lift and tilt are not separated, such as during emptying of the bucket.

Referring to the description above of the V-shaped driving pattern of the wheel loader, when the wheel loader has been forwarded to the dump truck and the bucket has been raised above a platform of the dump truck, the bucket should be tilted and on the same time lifted somewhat further in order to distribute the gravel onto the platform.

The lift function requires a high hydraulic pressure since the bucket with a heavy load should be lifted. However, it should only be lifted a small distance, which only requires a small hydraulic flow. On the other hand, the tilt function requires a high hydraulic flow since the bucket should be tilted all the way from a retracted position to an advanced position. The design of the mechanical linkage and the gravity serves for that only a small hydraulic pressure is required. Further, both the lift and tilt function only requires a moderate hydraulic power, since the hydraulic power is calculated by multiplying the pressure and the flow. Since the lift and tilt functions are connected in the same hydraulic system and operated by the same hydraulic pump, the pump has to be designed to fulfil all these demands. Thus, the pump will deliver a very high hydraulic power in order to provide both a high pressure and a high flow, which implies that the internal combustion engine will have to be designed to supply a comparatively high mechanical power. To summarize, due to the design of the hydraulic system, a higher hydraulic power is supplied than is demanded by the sum of the lift and tilt functions. This excess hydraulic power is throttled away to a hydraulic oil reservoir and thus forms a loss.

According to its abstract, EP 1 571 352 A1 discloses that a driving device of a work machine, such as a hydraulic shovel, includes a power generator adapted to be driven by an engine, and a power storage means for storing the electric power generated by the power generator. Electric motors and a motor generator, each of which is adapted to be operated by electric power supplied from either one of or both the power generator and the power storage means, respectively drive pumps and a pump motor.

### SUMMARY OF THE INVENTION

An object of the invention is to provide a working machine of the kind referred to in the introduction, which working machine enables a more effective operation of the working machine and lower fuel consumption.

The object is achieved by a working machine according to claim 1.

Thus, the working machine creates conditions for recuperating kinetic energy in the transmission line (and steering system) and potential energy from operation of the lifting arm unit during a complete working cycle.

In other words, each hydraulic function has a separate circuit and is driven by a separate electric machine. In this way, each hydraulic function may be operated individually without negatively effecting another hydraulic function. Thus, each hydraulic function may for example be controlled individually to recuperate energy. This creates conditions for distributing energy between the transmission line and the hydraulic circuits to a large extent and in different work operations. Further, it creates conditions for driving the pumps of the separate hydraulic functions individually and also distributing energy between the hydraulic circuits, which is advantageous for example during emptying of a bucket, see description above. The provision of the separate hydraulic circuits further creates conditions for a more free positioning of the electric machine and the associated pump for each function.

Further, by operating the hydraulic circuits electronically, the pumps may be operated to an optimum rotation speed independently from the operation of the transmission line (and the internal combustion engine). Thus, the operation of the internal combustion engine may remain unaffected while increasing the rotation speed of the pump(s).

By the provision of a transmission line comprising an electric machine for driving or braking the driving wheels, and/or for generating electric power for the hydraulic pumps, the power source can be more efficiently used, which enables a smaller power source to be used, and the fuel consumption can be lowered. For example, the hydraulic system can be driven at least partly by the electric machine instead of the power source. The power source is according to one example constituted by an internal combustion engine.

Thus, the rotation speed of the internal combustion engine does not need to be determined taking the hydraulic pumps into consideration. The electric machine of the transmission line can be used as a brake during a braking operation of the wheel loader, and at the same time function as a generator for recuperating energy. The energy can be directly supplied to the hydraulic circuits or stored in an electric energy storage means, such as a battery or super capacitor, to be used later on. If a great traction force is required, an additionally torque can be supplied to the driving wheels by means of the electric machine functioning as a electric motor, and, thus the need of the torque converter is decreased.

Further, in this way, the power source may be controlled to transmit energy directly to the driving wheels via a mechanical transmission line (via propeller shafts and transmissions) without any conversion to electric energy. Thus, in for example a transport mode, all power from the power source may be transmitted to the driving wheels. In another mode, all power supplied by the power source may be converted to electric energy for further distribution to the transmission line and/or the hydraulic circuits and/or a storage means. In a still further mode, a first part of the power from the power source may be supplied to the driving wheels directly, while a second part of the power from the power source may be converted to electric energy.

The transmission line comprises a transmission unit for engagement and disengagement of the power source relative to the driving wheels. In other words, the transmission unit is adapted for a mechanical connection between the power source and the driving wheels.

Furthermore, the electric machine of the transmission line can be used for driving the driving wheels in the reversed direction. The transmission line preferably comprises a gear box. This means that the reverse gear of the gearbox can be eliminated. A further advantage is that the electric machine can be used for adapting the speed of rotation of the internal combustion engine and the speed of rotation of the transmission line to each other so as to facilitate coupling or decoupling of a direct operation state of a transmission unit comprised in the transmission line.

According to another preferred embodiment, the power source is operatively connected to one of said at least one second electric machine so as to supply power only to said second electric machine. In other words, the working machine comprises a series hybrid. Thus, all power supplied from the power source is delivered to an electric machine for further electronic transmission to the hydraulic circuits and the driving wheels.

According to a further development of the last mentioned embodiment, the transmission line comprises a further second electric machine and that said second electric machine, which is operatively connected to the power source is operatively connected to said further second electric machine for an exchange of power.

Further advantages and advantageous features of the invention are disclosed in the following description and in the dependent claims.

### DEFINITIONS

By the term "electric machine" is meant a combined electric motor and generator. The electric machine can be driven by electricity to supply an output torque on a shaft or be mechanically driven by applying torque on a shaft for producing electricity.

The term "transmission unit" comprises hydraulic clutches, both hydrodynamic clutches such as torque converters and hydrostatic clutches, as well as mechanical clutches. Thus, "transmission unit" comprises both torque converters which can increase the torque, and ordinary clutches only used for disengagement and direct operation with the gear ratio of 1:1.

### BRIEF DESCRIPTION OF THE DRAWINGS

With reference to the appended drawings, below follows a more detailed description of embodiments of the invention cited as examples.

In the drawings:
Fig. 1 is a lateral view illustrating a wheel loader having a bucket for loading operations, and a hydraulic system for operating the bucket and steering the wheel loader,
Fig. 2 is a schematic illustration of a hydraulic system for a wheel loader,
Fig. 3 is a schematic illustration of a transmission line of a wheel loader according to prior art,
Fig. 4 is a schematic illustration of a transmission line of a working machine according to the invention,
Fig. 5 is a schematic illustration of a first variant of a transmission line of a working machine according to the invention,
Fig. 6 is a schematic illustration of a second variant of a transmission line of a working machine according to the invention, and
Fig. 7 is a schematic illustration of a short cycle operation mode of a wheel loader according to prior art.

### DETAILED DESCRIPTION OF PREFERRED EMBODIMENTS OF THE INVENTION

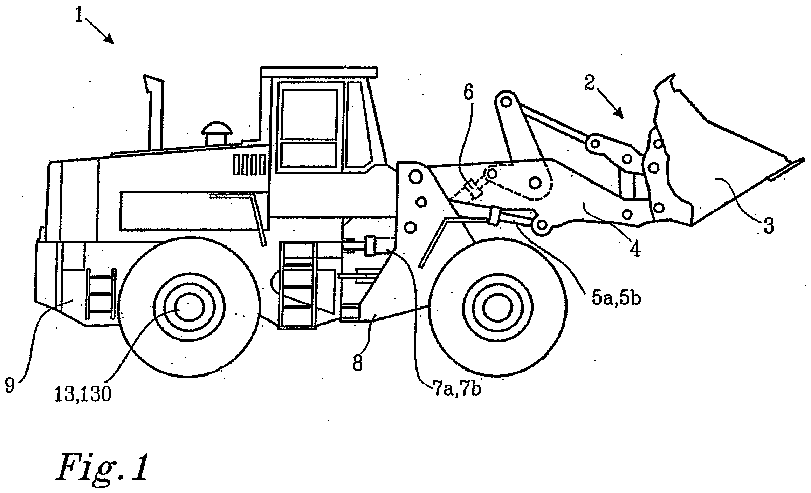

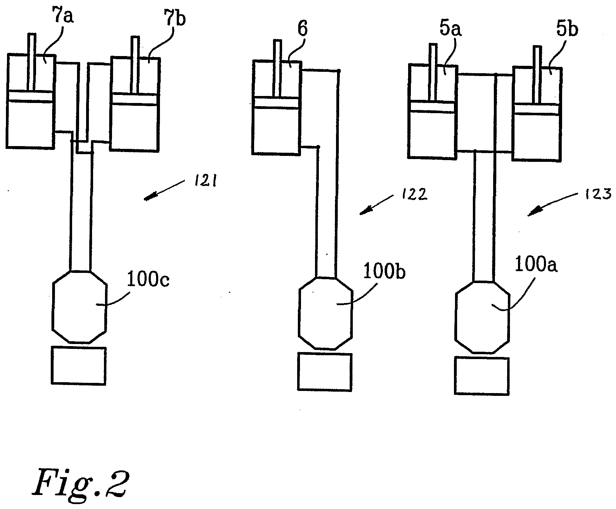

Fig. 1 is an illustration of a wheel loader 1 having an implement 2 in the form of a bucket 3. The bucket 3 is arranged on an arm unit 4 for lifting and lowering the bucket 3, and further the bucket 3 can be tilted or pivoted relative to the arm unit 4. The wheel loader 1 is provided with a hydraulic system comprising at least one hydraulic pump (not shown in Fig. 1) and working cylinders 5a, 5b, 6 for the operation of the arm unit 4 and the bucket 3. Furthermore, the hydraulic system comprises working cylinders 7a, 7b for turning the wheel loader by means of relative movement of a front body 8 and a rear body 9. A schematic illustration of such a hydraulic system is shown in Fig. 2.

In the embodiment illustrated in Fig. 2, three hydraulic circuits 121,122,123 are disclosed. A first hydraulic circuit 121 is configured for a lifting function, a second hydraulic circuit 122 is configured for a tilting function and a third hydraulic circuit 123 is configured for a steering function. Each hydraulic circuit comprises a hydraulic pump 100a, 100b, 100c for operating the associated implement or steering function, Further, two working cylinders known as lifting cylinders 5a, 5b are arranged for lifting and lowering the arm unit 4, and a further working cylinder known as tilting cylinder 6 is arranged for tilting-in or tilting-out the bucket 3 relative to the arm unit 4. In addition, two working cylinders known as the steering cylinders 7a, 7b are arranged for steering the wheel loader 1. The three hydraulic pumps 100a, 100b, 100c are adapted to supply the hydraulic cylinders with hydraulic oil. An operator of the working machine can control the working cylinders by means of instruments connected to a control unit (not shown).

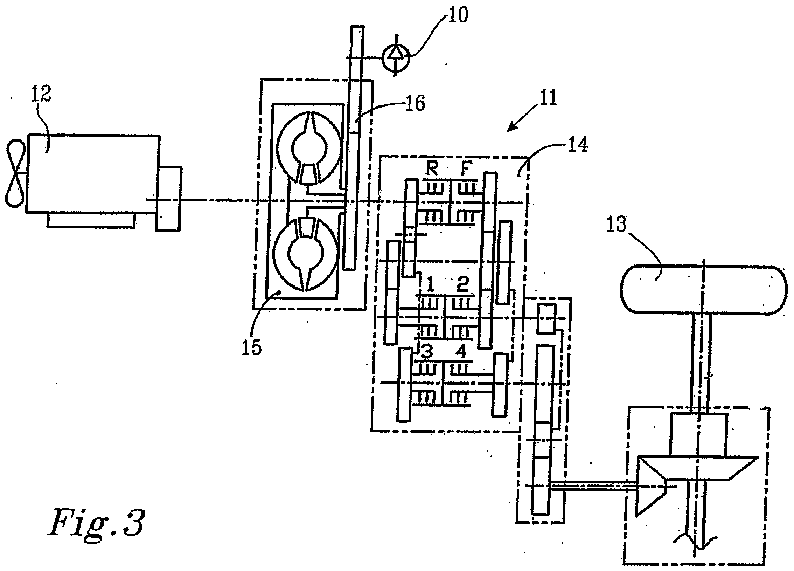

Fig. 3 is a schematic illustration of a transmission line 11 of a wheel loader 1 according to prior art. At one end of the transmission line 11 an internal combustion engine 12 is arranged. The other end of the transmission line 11 is coupled to the driving wheels 13 of the wheel loader 1. The internal combustion engine 12 supplies torque to the driving wheels 13 of the wheel loader 1 via the transmission line 11. As illustrated, the transmission line 11 may comprise a gearbox 14 for varying the speed of the vehicle 1, and for changing between forward and backward driving direction of the wheel loader 1. A hydrodynamic converter 15 is arranged between the internal combustion engine 12 and the gearbox 14. The transmission line 11 of the wheel loader 1 has means for driving a hydraulic pump 10 in a hydraulic system for lifting operations and steering the wheel loader 1. According to prior art the hydraulic pump 10 is driven by the internal combustion engine 12, preferably via gear wheels 16 arranged between the torque converter 15 and the gearbox 14.

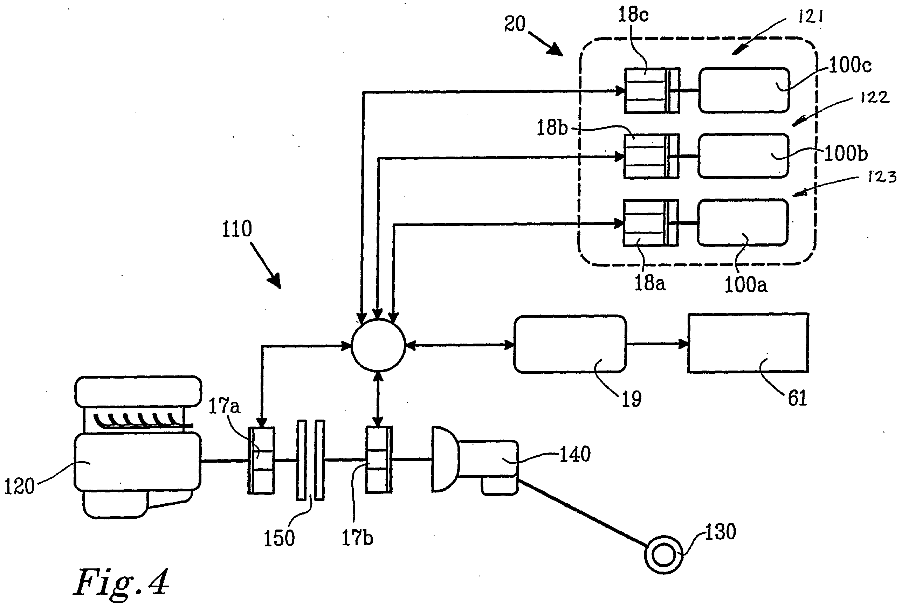

A transmission line 110 of a working machine 1 according to the invention is schematically illustrated in Fig. 4. At one end of the transmission line 110 a power source in the form of an internal combustion engine 120 is arranged. The other end of the transmission line 110 is coupled to the driving wheels 130 of the working machine 1. The internal combustion engine 120 supplies torque to the driving wheels 130 of the working machine 1 via the transmission line 110. As illustrated, the transmission line 110 may comprise a gearbox 140 for varying the speed of the vehicle 1, and for changing between forward and backward driving direction of the working machine 1. In the embodiment illustrated in figure 4, the transmission line 110 also comprises a transmission unit 150 for engagement and disengagement of the internal combustion engine 120 relative to the driving wheels 130. The transmission unit 150 is preferably a hydraulic clutch of the type called hydrodynamic torque converter. The torque converter is able to increase the torque, which means that the output torque of the torque converter can be for example in the interval 1-3 times the torque of the internal combustion engine 120. Furthermore, the torque converter has preferably a free wheel function and a lock-up function for direct operation without any increased torque. Thus, the transmission ratio of the torque converter in the lock-up state is fixed, and preferably substantially 1:1. However, in an alternative embodiment the transmission unit 150 could be an ordinary clutch for disengagement or direct operation without any increased torque. Such a clutch could be a hydraulic clutch as well as a mechanical clutch.

According to the invention, the transmission line 110 of the working machine 1 comprises at least one second electric machine 17a, 17b for driving or braking the driving wheels 130, and/or for powering said at least one hydraulic pump 100a, 100b, 100c by electricity.

Although the embodiment illustrated in figure 4 has three hydraulic pumps used for providing the functions described with reference to figure 2, in another embodiment one, two, four or more hydraulic pumps may be used in a hydraulic system 20 for providing these functions and/or other functions. In a preferred embodiment of the invention the working machine has at least two implement and/or steering functions, and at least one said hydraulic pump is arranged for each implement and/or steering function. In the embodiment examples schematically illustrated in figures 2 and 4, the working machine comprises three hydraulic pumps 100a, 100b, 100c; a first hydraulic pump 100a is arranged to provide a lifting and lowering function of the implement, a second hydraulic pump 100b is arranged to provide a tilting function of the implement, and a third hydraulic pump 100c is arranged to provide the steering function of the working machine. By separate hydraulic pumps for these functions the operation of the working machine can be further optimized and thus the total energy consumption can be lowered.

A separate first electric machine 18a, 18b, 18c is drivingly connected to each of said hydraulic pumps 100a, 100b, 100c for an individual supply of energy to the pump and extraction of energy from the pump. Further, said at least one second electric machine 17a, 17b is operatively connected to said first electric machines for an exchange of power between the hydraulic circuits 121,122,123 and the transmission line 110.

Thus, the second electric machines 17a, 17b are electrically connected to the hydraulic pumps 100a, 100b, 100c via the respective first electric machine (motor/generator) 18a, 18b, 18c driven by electricity. The second electric machines 17a, 17b can be connected directly to the first electric machines of the hydraulic pumps as well as connected to an electric energy storage means 19, such as a battery or a super capacitor, which in turn is connected to the first electric machines of the hydraulic pumps. The working machine 1 preferably comprises such an electric energy storage means 19 for storing energy and providing energy to the hydraulic pumps or to the electric machines 17a, 17b, 18a, 18b, 18c. Furthermore, conventional control units (not shown) can be used to control the energy transfer in different parts of the system illustrated in figure 4. As described in connection to the Figs. 1 and 2, the working machine 1 can have an implement 2 in the form of a bucket 3 which is operated by means of the hydraulic system 20. However, it should be emphasised that also other implements are naturally usable. When applying the invention on a working machine such as an articulated hauler or a truck, the implement can instead be for example a dump body. Usually a hydraulic pump and working cylinders are used for the operation of the dump body during the dumping movement.

Preferably, the transmission line 110 comprises two second electric machines 17a, 17b, one 17a of which is arranged upstream the transmission unit 150 and the second 17b is arranged downstream the transmission unit 150. By using two second electric machines the number of possible operation modes is increased. In the embodiment illustrated in figure 4, the transmission line comprises one electric machine 17a arranged between the internal combustion engine 120 and the transmission unit 150, and one electric machine 17b arranged between the transmission unit 150 and the gearbox 140. The second electric machines 17a, 17b are electrically connected to each other for transmitting torque from the internal combustion engine 120 to the driving wheels 130 via the electric machines 17a, 17b. Furthermore, the second electric machines are electrically connected to the electric energy storage means 19 and to the respective first electric machine (motor) 18a, 18b, 18c of the hydraulic pumps. A first of the second electric machines 17a can be driven by the internal combustion engine 120 for supplying energy directly to the hydraulic pumps or to the electric energy storage means 19, or to the other second electric machine 17b. The other second electric machine 17b can be used to brake the driving wheels 130 of the working machine 1 during a brake operation of the working machine and for supplying energy directly to the hydraulic pumps or to the electric energy storage means 19. The electric machine 17a or the other electric machine 17b can also be powered by the electric energy storage means 19 in order to drive the driving wheels 130 of the working machine 1, or the other second electric machine 17b can be powered by the first second electric machine 17a for the same reason.

Although, a transmission line 110 comprising two electric machines is preferred, nevertheless advantages can be obtained by using one electric machine only, preferably arranged between the transmission unit and the driving wheels, and upstream any gearbox, i.e. between the transmission unit and the gearbox in the same way as the second electric machine 17b is arranged in Fig. 4. It is also possible to use one said electric machine for each driving wheel. In such a case, usually four electric machines are used for driving four driving wheels. Each electric machine is then preferably connected to the respective driving wheel via a respective gear box.

Furthermore, it would be possible to combine the prior art technique where the hydraulic pump is driven by the internal combustion engine, for example such as described in connection with figure 3, with an electric machine for driving the hydraulic pump. Then, the hydraulic pump can be driven by the internal combustion engine and/or the electric machine at different times so as to optimize the operation.

In addition, the energy stored by the electric energy storage means 19 may in some cases be used for other functions 61 of the wheel loader, such as compressors, fans, actuators, etc.

At least one second electric machine 17a, 17b comprised in the transmission line 110 is used to drive or brake the driving wheels 130 and/or generate electric power for said at least one hydraulic pump 100a, 100b, 100c. In addition to the advantages obtained by operating the hydraulic pumps by means of power from one or more second electric machines 17a, 17b, the second electric machine 17a, 17b can be used for supplying torque to the driving wheels 130. By adapting the use of the internal combustion engine 120 and/or the electric machine/machines 17a, 17b to the current conditions, the total efficiency of the transmission line 110 can be increased.

With reference to Fig. 4, the driving wheels 130 can be driven by:
The internal combustion engine 120 together with lock-up or torque converter 150,
   or the internal combustion engine 120 and/or the one of the second electric machines 17a and/or the other second electric machine 17b together with lock-up or torque converter 150,
   or the one of the second electric machines 17a and the other second electric machine 17b without lock-up or torque converter 150,
   or by the other second electric machine 17b without lock-up or torque converter 150.

The second electric machine 17a can be driven by the internal combustion engine 120 for generating electricity or by the electric energy storage means 19 for providing torque, and the other second electric machine 17b can be driven by the first second electric machine 17a or the electric energy storage means 19 for providing torque. The torque converter 150 could be replaced by an ordinary hydraulic or mechanical clutch, offering the same alternatives as for the lock-up state of the hydrodynamic torque converter.

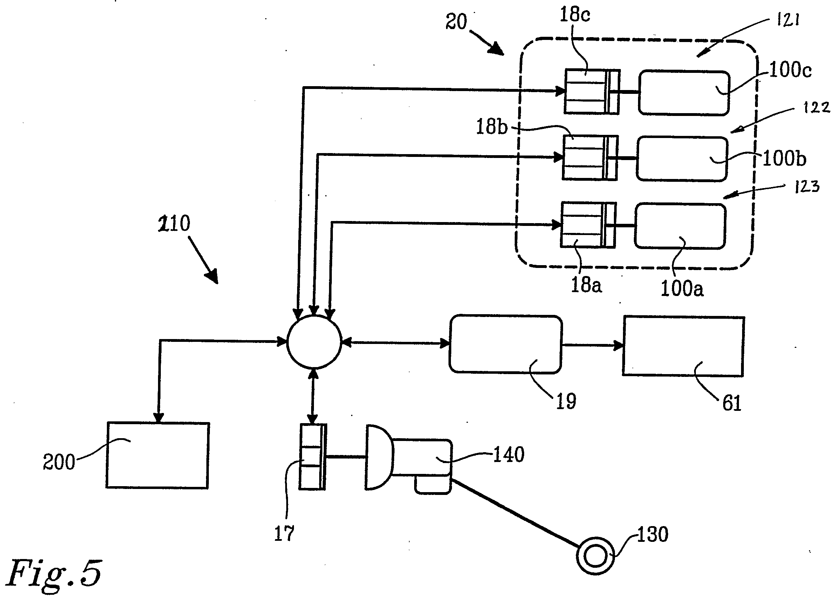

In figure 5 a working machine, which is not within the scope of the appended claims, comprising an electric power generating motor 200 for supplying electricity to the working machine is illustrated. The working machine comprises at least two hydraulic circuits 121,122,123, one hydraulic circuit for each of said functions, wherein each hydraulic circuit comprises at least one hydraulic pump 100a, 100b, 100c for operating the associated implement or steering function. Further, a separate first electric machine 18a, 18b, 18c is drivingly connected to each of said hydraulic pumps 100a, 100b, 100c for an individual supply of energy to the pump and extraction of energy from the pump,

The working machine further comprises a transmission line 210 for moving the working machine via the driving wheels 130, wherein the transmission line comprises at least one second electric machine 17, which is operatively connected to said first electric machines for an exchange of power between the hydraulic circuits 121,122,123 and the transmission line 110, 210, 310. Thus, the electric power generating motor 200 is arranged to supply electricity to said at least one electric machine 17 and said at least one hydraulic pump 100a, 100b, 100c via said first electric machines 18a, 18b, 18c.

By the provision of at least one electric machine for driving the driving wheels of the working machine and a motor which supplies energy in the form of electricity, wherein the electric power generating motor is arranged to supply electricity to said at least one electric machine and said at least one hydraulic pump, the energy from the electric power generating motor, for example an internal combustion engine provided with an generator, can be more efficiently used and the total energy consumption can be lowered. The hydraulic system can be driven, without the need of adapting the rotation speed of the electric power generating motor. Furthermore, the electric machine can be used as a brake during a braking operation of the working machine, such as a wheel loader, and at the same time function as a generator for recuperating energy. The energy from the electric power generating motor can be directly supplied to the electric machine and the hydraulic system or stored in an electric energy storage means, such as a battery or super capacitor, to be used later on.

Furthermore, the electric machine can be used for driving the driving wheels in the reversed direction. This means that the reverse gear of the gearbox can be eliminated.

Although the working machine illustrated in figure 5 has one electric machine 17, it is possible to use two or more electric machines. For example, the working machine may comprise one said electric machine for each driving wheel. In this case, usually four electric machines are used for driving four driving wheels. Each electric machine is preferably connected to the respective driving wheel via a respective gear box.

The working machine preferably comprises an electric energy storage means 19 for storing energy from the electric power generating motor 200 and/or from said at least one electric machine 17. This electric energy storage means 19 is then used to provide electricity to said at least one electric machine 17 and/or said at least one hydraulic pump 100a, 100b, 100c.

In addition to drive the driving wheels 130, one or more of said at least one electric machine 17 can be used to brake the driving wheels of the working machine during a brake operation of the working machine. At the same time the electric machine 17 can function as a generator for recuperating energy which energy can be stored in the electric energy storage means 19 and/or used for the hydraulic system 20.

In a preferred embodiment of the invention the working machine has at least two implement and/or steering functions, and at least one said hydraulic pump is arranged for each implement and/or steering function. In the embodiment examples schematically illustrated in figures 2 and 5, the working machine comprises three hydraulic pumps 100a, 100b, 100c; a first hydraulic pump 100a is arranged to provide a lifting and lowering function of the implement, a second hydraulic pump 100b is arranged to provide a tilting function of the implement, and a third hydraulic pump 100c is arranged to provide the steering function of the working machine. By separate hydraulic pumps for these functions the operation of the working machine can be further optimized and thus the total energy consumption can be lowered.

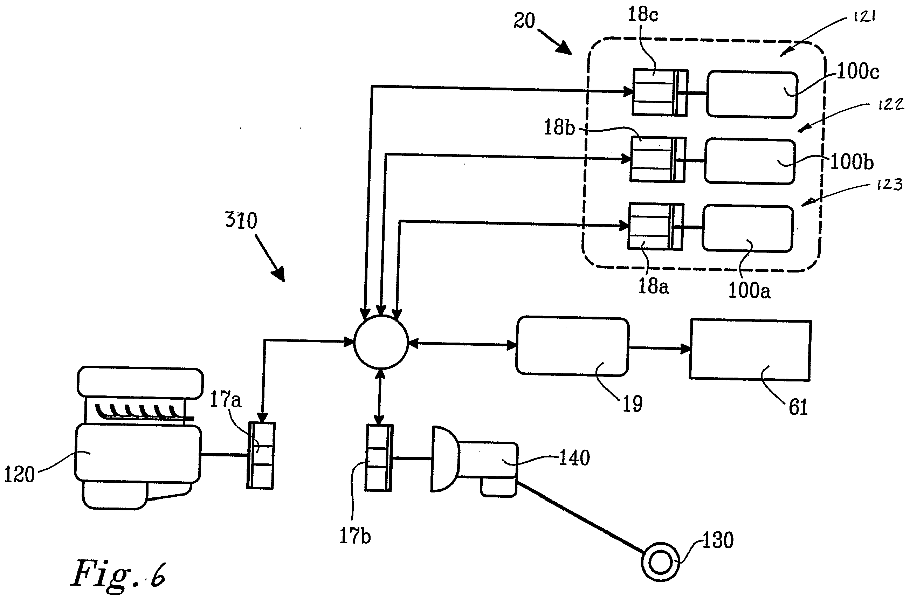

Fig. 6 is a schematic illustration of a further variant of a transmission line 310 of a working machine according to the invention. The transmission line 310 differs from the transmission line 110 of figure 4 in that there is no transmission unit 150 between the two second electric machines 17a, 17b in figure 6.

The working machine schematically indicated in figure 6 is adapted for at least two functions, which comprise moving an implement 2 and/or steering the machine, the machine comprises three hydraulic circuits 121,122,123, one hydraulic circuit for each of said functions, wherein each hydraulic circuit comprises one hydraulic pump 100a, 100b, 100c for operating the associated implement or steering function. A separate first electric machine 18a, 18b, 18c is drivingly connected to each of said hydraulic pumps 100a, 100b, 100c) for an individual supply of energy to the pump and extraction of energy from the pump.

Further, the transmission line 310 for moving the working machine via driving wheels 130 comprises said two second electric machines 17a, 17b, which are operatively connected to said first electric machines for an exchange of power between the hydraulic circuits 121,122,123 and the transmission line 310.

The power source 120 is operatively connected to one 17a of said second electric machines so as to supply power only to said second electric machine 17a. The transmission line 310 further comprises a further second electric machine 17b and said second electric machine 17a, which is operatively connected to the power source 120, is operatively connected to said further second electric machine 17b for an exchange of power.

Within the scope of the invention, the electric power generating motor 200 can be designed in many different ways as long as it is able to provide electricity. One option is to use a fuel cell for providing electricity. Another example of an electric power generating motor is an internal combustion engine provided with an electric generator. A further solution is to use a gas turbine provided with an electric generator. The electric power generating motor can also be a free-piston engine provided with an electric generator.

It should be pointed out that throughout the application the term "driving wheels" is meant to comprise vehicle wheels for direct engagement with the ground as well as vehicle wheels for driving a ground engaging member, such as tracks, crawlers or similar.

It is to be understood that the present invention is not limited to the embodiments described above and illustrated in the drawings; rather, the skilled person will recognize that many changes and modifications may be made within the scope of the appended claims.

For example, the power is not necessarily developed in the working machine itself. For example, an external power supply may be used. More specifically, the working machine may be provided with means for plug-in into a general electricity supply network. In such a case, the energy storage means in the working machine must be substantial.

## Claims

1. A working machine (1) adapted for at least two functions, which comprise moving an implement (2) and/or steering the machine, wherein the machine comprises:
- at least two hydraulic circuits (121,122,123), one hydraulic circuit for each of said functions, wherein each hydraulic circuit comprises at least one hydraulic pump (100a, 100b, 100c) for operating the associated implement or steering function,
- a separate first electric machine (18a, 18b, 18c) drivingly connected to each of said hydraulic pumps (100a, 100b, 100c) for an individual supply of energy to the pump and extraction of energy from the pump,
**characterized by**
- a transmission line (110, 210, 310) for moving the working machine via driving wheels (130), wherein the transmission line comprises at least one second electric machine (17a, 17b), which is operatively connected to said first electric machines for an exchange of power between the hydraulic circuits (121,122,123) and the transmission line (110, 210, 310), wherein the working machine comprises a power source (120, 200) adapted to provide power to the hydraulic circuits (121,122,123) and to the transmission line (110, 210, 310), wherein the transmission line (110) comprises a transmission unit (150) for engagement and disengagement of the power source (120) relative to the driving wheels (130) wherein the transmission unit is a hydrodynamic torque converter (150) or a mechanical clutch.

2. A working machine according to claim 1, **characterized in that** the power source (120) is constituted by an internal combustion engine.

3. A working machine according to claim 1 or 2, **characterized in that,** when the transmission unit is a hydrodynamic torque converter (150), the hydrodynamic torque converter (150) has a lock-up function where the transmission ratio of the torque converter is fixed.

4. A working machine according to claim 1 or 2, **characterized in that** the power source (120, 200) is operatively connected to one (17a) of said at least one second electric machine so as to supply power only to said second electric machine (17a).

5. A working machine according to claim 4, **characterized in that** the transmission line (210, 310) comprises a further second electric machine (17b) and that said second electric machine (17a), which is operatively connected to the power source (120, 200), is operatively connected to said further second electric machine (17b) for an exchange of power.

6. A working machine according to any preceding claim, **characterized in that** the working machine (1) comprises an electric energy storage means (19), which is operatively connected to said first electric machines (18a, 18b, 18c) and/or said at least one second electric machine (17a, 17b).

7. A working machine according to claim 6, **characterized in that** one or more of said electric machines (17a, 17b, 18a, 18b, 18c) is arranged to charge the electric energy storage means (19) when the electric machine functions as a generator.

8. A working machine according to any preceding claim, **characterized in that** one or more of said at least one second electric machines (17a, 17b) is arranged to brake the driving wheels (130) of the working machine (1) during a brake operation of the working machine.

9. A working machine according to any preceding claim, **characterized in that** one or more of said at least one second electric machines (17a, 17b) is arranged to drive the driving wheels (130) of the working machine (1) during operation of the implement (2) or during acceleration of the working machine (1).

10. A working machine according to any of claims 1 or 3, **characterized in that** one or more of said at least one second electric machine (17a, 17b) is arranged to facilitate coupling or decoupling of a direct operation state of the transmission unit (150) by adapting the rotation of speed of the internal combustion engine (120) and the rotation of speed of the transmission line (110) to each other.

11. A working machine according to any preceding claim, **characterized in that** the working machine comprises three hydraulic pumps; a first hydraulic pump (100a) being arranged to provide a lifting and lowering function of the implement, a second hydraulic pump (100b) being arranged to provide a tilting function of the implement, and a third hydraulic pump (100c) being arranged to provide the steering function of the working machine.

12. A working machine according to any preceding claim, wherein the working machine is a wheel loader (1).

## Patentansprüche

1. Arbeitsmaschine (1), die für wenigstens zwei Funktionen angepasst ist, die ein Bewegen eines Geräts (2) und/oder ein Lenken der Maschine umfassen, wobei die Maschine umfasst:
- wenigstens zwei Hydraulikkreise (121, 122, 123), einen Hydraulikkreis für jede der Funktionen, wobei jeder Hydraulikkreis wenigstens eine Hydraulikpumpe (100a, 100b, 100c) zum Betätigen des zugehörigen Geräts oder der Lenkfunktion umfasst,
- eine separate erste elektrische Maschine (18a, 18b, 18c), die mit jeder der Hydraulikpumpen (100a, 100b, 100c) für eine individuelle Energiezufuhr zu der Pumpe und Energieentnahme aus der Pumpe antriebsmäßig verbunden ist,
**gekennzeichnet durch**
- eine Übertragungsleitung (110, 210, 310) zum Bewegen der Arbeitsmaschine über Antriebsräder (130), wobei die Übertragungsleitung wenigstens eine zweite elektrische Maschine (17a, 17b) umfasst, die mit den ersten elektrischen Maschinen für einen Kraftaustausch zwischen den Hydraulikkreisen (121, 122, 123) und der Übertragungsleitung (110, 210, 310) funktionell verbunden ist, wobei die Arbeitsmaschine eine Kraftquelle (120, 200) umfasst, die daran angepasst ist, Kraft für die Hydraulikkreise (121, 122, 123) und für die Übertragungsleitung (110, 210, 310) bereitzustellen, wobei die Übertragungsleitung (110) eine Übertragungseinheit (150) zum Einrücken und Ausrücken der Kraftquelle (120) bezüglich der Antriebsräder (130) umfasst, wobei die Übertragungseinheit ein hydrodynamischer Drehmomentwandler (150) oder eine mechanische Kupplung ist.

2. Arbeitsmaschine nach Anspruch 1, **dadurch gekennzeichnet, dass** die Kraftquelle (120) durch einen Verbrennungsmotor gebildet ist.

3. Arbeitsmaschine nach Anspruch 1 oder 2, **dadurch gekennzeichnet, dass**, wenn die Übertragungseinheit ein hydrodynamischer Drehmomentwandler (150) ist, der hydrodynamische Drehmomentwandler (150) eine Blockierfunktion aufweist, bei der das Übertragungsverhältnis des Drehmomentwandlers festgelegt ist.

4. Arbeitsmaschine nach Anspruch 1 oder 2, **dadurch gekennzeichnet, dass** die Kraftquelle (120, 200) mit einer (17a) der wenigstens einen zweiten elektrischen Maschine funktionell verbunden ist, um nur der zweiten elektrischen Maschine (17a) Kraft zuzuführen.

5. Arbeitsmaschine nach Anspruch 4, **dadurch gekennzeichnet, dass** die Übertragungsleitung (210, 310) eine weitere zweite elektrische Maschine (17b) umfasst und dass die zweite elektrische Maschine (17a), die mit der Kraftquelle (120, 200) funktionell verbunden ist, mit der weiteren zweiten elektrischen Maschine (17b) für einen Kraftaustausch funktionell verbunden ist.

6. Arbeitsmaschine nach einem vorhergehenden Anspruch, **dadurch gekennzeichnet, dass** die Arbeitsmaschine (1) eine Elektroenergiespeichereinrichtung (19) umfasst, die mit den ersten elektrischen Maschinen (18a, 18b, 18c) und/oder der wenigstens einen zweiten elektrischen Maschine (17a, 17b) funktionell verbunden ist.

7. Arbeitsmaschine nach Anspruch 6, **dadurch gekennzeichnet, dass** eine oder mehrere der elektrischen Maschinen (17a, 17b, 18a, 18b, 18c) so angeordnet ist, dass sie die Elektroenergiespeichereinrichtung (19) lädt, wenn die elektrische Maschine als Generator funktioniert.

8. Arbeitsmaschine nach einem vorhergehenden Anspruch, **dadurch gekennzeichnet, dass** eine oder mehrere der wenigstens einen zweiten elektrischen Maschinen (17a, 17b) so angeordnet ist, dass sie die Antriebsräder (130) der Arbeitsmaschine (1) während eines Bremsvorgangs der Arbeitsmaschine bremst.

9. Arbeitsmaschine nach einem vorhergehenden Anspruch, **dadurch gekennzeichnet, dass** eine oder mehrere der wenigstens einen zweiten elektrischen Maschinen (17a, 17b) so angeordnet ist, dass sie die Antriebsräder (130) der Arbeitsmaschine (1) während eines Betriebs des Geräts (2) oder während einer Beschleunigung der Arbeitsmaschine (1) antreibt.

10. Arbeitsmaschine nach einem der Ansprüche 1 bis 3, **dadurch gekennzeichnet, dass** eine oder mehrere der wenigstens einen zweiten elektrischen Maschine (17a, 17b) so angeordnet ist, dass sie ein Koppeln oder Entkoppeln eines direkten Betriebszustands der Übertragungseinheit (150) durch Anpassen der Drehzahl des Verbrennungsmotors (120) und der Drehzahl der Übertragungsleitung (110) aneinander erleichtert.

11. Arbeitsmaschine nach einem vorhergehenden Anspruch, **dadurch gekennzeichnet, dass** die Arbeitsmaschine drei Hydraulikpumpen umfasst: eine erste Hydraulikpumpe (100a), die so angeordnet ist, dass sie eine Hebe- und Senkfunktion des Geräts bereitstellt, eine zweite Hydraulikpumpe (100b), die so angeordnet ist, dass sie eine Neigefunktion des Geräts bereitstellt, und eine dritte Hydraulikpumpe (100c), die so angeordnet ist, dass sie die Lenkfunktion der Arbeitsmaschine bereitstellt.

12. Arbeitsmaschine nach einem vorhergehenden Anspruch, wobei die Arbeitsmaschine ein Radlader ist.

## Revendications

1. Machine de travail (1) adaptée à au moins deux fonctions, qui comprennent le déplacement d'un outil (2) et/ou la direction de la machine, dans laquelle la machine comprend :
- au moins deux circuits hydrauliques (121, 122, 123), un circuit hydraulique pour chacune desdites fonctions, où chaque circuit hydraulique comprend au moins une pompe hydraulique (100a, 100b, 100c) pour actionner la fonction d'outil ou de direction associée,
- une première machine électrique séparée (18a, 18b, 18c) reliée par entraînement à chacune desdites pompes hydrauliques (100a, 100b, 100c) pour une alimentation individuelle de la pompe en énergie et une extraction d'énergie de la pompe,
**caractérisée par**
- une ligne de transmission (110, 210, 310) pour déplacer la machine de travail par l'intermédiaire de roues d'entraînement (130), où la ligne de transmission comprend au moins une deuxième machine électrique (17a, 17b), qui est reliée de manière fonctionnelle auxdites premières machines électriques pour un échange de puissance entre les circuits hydrauliques (121, 122, 123) et la ligne de transmission (110, 210, 310), où la machine de travail comprend une source d'alimentation (120, 200) adaptée pour fournir de la puissance aux circuits hydrauliques (121, 122, 123) et à la ligne de transmission (110, 210, 310), où la ligne de transmission (110) comprend une unité de transmission (150) pour l'engagement et le désengagement de la source d'alimentation (120) par rapport aux roues d'entraînement (130), où l'unité de transmission est un convertisseur de couple hydrodynamique (150) ou un embrayage mécanique.

2. Machine de travail selon la revendication 1, **caractérisée en ce que** la source d'alimentation (120) est constituée d'un moteur à combustion interne.

3. Machine de travail selon la revendication 1 ou 2, **caractérisée en ce que**, lorsque l'unité de transmission est un convertisseur de couple hydrodynamique (150), le convertisseur de couple hydrodynamique (150) présente une fonction de verrouillage où le rapport de transmission du convertisseur de couple est fixé.

4. Machine de travail selon la revendication 1 ou 2, **caractérisée en ce que** la source d'alimentation (120, 200) est reliée de manière fonctionnelle à l'une (17a) de ladite ou desdites seconde(s) machine(s) électrique(s) de manière à fournir de la puissance uniquement à ladite deuxième machine électrique (17a).

5. Machine de travail selon la revendication 4, **caractérisée en ce que** la ligne de transmission (210, 310) comprend en outre une deuxième machine électrique supplémentaire (17b) et ladite deuxième machine électrique (17a), qui est reliée de manière fonctionnelle à la source d'alimentation (120, 200), est reliée de manière fonctionnelle à ladite deuxième machine électrique supplémentaire (17b) pour un échange de puissance.

6. Machine de travail selon l'une des revendications précédentes, **caractérisée en ce que** la machine de travail (1) comprend un moyen de stockage d'énergie électrique (19), qui est relié de manière fonctionnelle auxdites premières machines électriques (18a, 18b, 18c) et/ou à ladite au moins une deuxième machine électrique (17a, 17b).

7. Machine de travail selon la revendication 6, **caractérisée en ce qu'**une ou plusieurs desdites machines électriques (17a, 17b, 18a, 18b, 18c) est/sont agencée(s) pour charger le moyen de stockage d'énergie électrique (19) lorsque la machine électrique fonctionne comme un générateur.

8. Machine de travail selon l'une des revendications précédentes, **caractérisée en ce qu'**une ou plusieurs de ladite ou desdites machine(s) électrique(s) (17a, 17b) est/sont agencée(s) pour freiner les roues d'entraînement (130) de la machine de travail (1) pendant une opération de freinage de la machine de travail.

9. Machine de travail selon l'une des revendications précédentes, **caractérisée en ce qu'**une ou plusieurs de ladite ou desdites machine(s) électrique(s) (17a, 17b) est/sont agencée(s) pour entraîner les roues d'entraînement (130) de la machine de travail (1) pendant le fonctionnement de l'outil (2) ou pendant l'accélération de la machine de travail (1).

10. Machine de travail selon l'une des revendications 1 ou 3, **caractérisée en ce qu'**une ou plusieurs de ladite ou desdites machine(s) électrique(s) (17a, 17b) est/sont agencée(s) pour faciliter le couplage ou le découplage d'un état de fonctionnement direct de l'unité de transmission (150) par adaptation de la vitesse de rotation du moteur à combustion interne (120) et de la vitesse de rotation de la ligne de transmission (110) l'une à l'autre.

11. Machine de travail selon l'une des revendications précédentes, **caractérisée en ce que** la machine de travail comprend trois pompes hydrauliques ; une première pompe hydraulique (100a) étant agencée pour assurer une fonction de levage et d'abaissement de l'outil, une deuxième pompe hydraulique (100b) étant agencée pour assurer une fonction de basculement de l'outil, et une troisième pompe hydraulique (100c) étant agencée pour assurer la fonction de direction de la machine de travail.

12. Machine de travail selon l'une des revendications précédentes, dans laquelle la machine de travail est une chargeuse sur roues (1).
